# EUROPÄISCHE PATENTSCHRIFT

(11) **EP 1 175 318 B1**
(45) Veröffentlichungstag und Bekanntmachung des Hinweises auf die Patenterteilung: **09.03.2005**
(21) Anmeldenummer: 00901520.7
(22) Anmeldetag: 11.01.2000
(51) Int. Cl.: B60T 1/08

(54) **VERFAHREN ZUM ABBREMSEN EINES DREHBAREN OBERWAGENS EINER ARBEITSMASCHINE SOWIE SCHWENKBREMSEINRICHTUNG**
METHOD FOR BRAKING A REVOLVABLE SUPERSTRUCTURE OF A WORKING MACHINE AND A PIVOTED BRAKE UNIT
PROCEDE POUR FREINER UN CHASSIS TOURNANT D'UN ENGIN, ET DISPOSITIF DE FREINAGE PAR PIVOTEMENT

(30) Priorität: 06.05.1999 DE 19920867
(43) Veröffentlichungstag der Anmeldung: 30.01.2002
(73) Patentinhaber: CNH Baumaschinen GmbH, 13581 Berlin (DE)
(72) Erfinder: KOHLMORGEN, Horst, D-44269 Dortmund (DE); WAEGNER, Hans-Joachim, D-45731 Waltrop (DE); KRÜGER, Ulrich, D-44536 Lünen (DE)
(74) Vertreter: Patentanwälte Meinke, Dabringhaus und Partner
(86) Internationale Anmeldenummer: PCT/EP2000/000115
(87) Internationale Veröffentlichungsnummer: WO 2000/068048

(56) Entgegenhaltungen:
- EP-A1- 0 552 649
- EP-A1- 0 671 301
- DE-A1- 3 103 728

## Beschreibung

Die Erfindung betrifft ein verfahren zum Abbremsen eines drehbaren Oberwagens einer Arbeitsmaschine, bei welchem die Drehbewegung des Oberwagens über einen in einem geschlossenen Hydraulikkreis angeordneten, regelbaren Hydrostaten erzeugt wird, wobei der Hydrostat zur Einleitung der Drehbewegung über einen vom Fahrer betätigbaren Steuerhebel angesteuert wird, welcher wenigstens eine Null-Stellung und zwei Schaltstellungen für zwei gegenläufige Drehrichtungen des Oberwagens aufweist, wobei die Abbremsung des Oberwagens durch Gegensteuern entgegen der Drehrichtung des Oberwagens erfolgt. Die Erfindung betrifft ferner eine Schwenkbremseinrichtung zum Abbremsen eines drehbaren Oberwagens einer Arbeitsmaschine mit einem über einen in einem geschlossenen Hydraulikkreis angeordneten, regelbaren Hydrostaten angetriebenen drehbaren Oberwagen, wobei der Hydrostat zur Einleitung der Drehbewegung über einen vom Fahrer betätigbaren Steuerhebel ansteuerbar ist, welcher wenigstens eine Null-Stellung und zwei Schaltstellungen für zwei gegenläufige Drehrichtungen des Oberwagens aufweist.

Bei Arbeitsmaschinen mit einem drehbaren Oberwagen, der auf einem Drehlager gelagert ist und über einen Drehantrieb in Form eines Getriebes verfügt, wie z.B. ein Bagger, ein Kran oder dgl., wird der drehbare Oberwagen über einen Drehmotor angetrieben, der hydraulisch oder elektrisch ausgebildet sein kann. Dieser Drehmotor bewirkt in den meisten Fällen über ein Getriebe, das mit einem Ritzel in die Verzahnung des Drehlagers eingreift, die Drehung des Oberwagens der Arbeitsmaschine.

Das Abbremsen der Drehbewegung des Oberwagens kann auf verschiedene Arten vorgenommen werden.

Bekannt sind z.B. Reibungsbremsen, die entweder im Drehmotor oder im Drehgetriebe oder direkt am Drehlager angeordnet sind. Die Steuerung der Reibungsbremsen erfolgt auf unterschiedliche Weise. Bekannt ist die Ansteuerung durch ein vom Fahrer betätigtes Pedal sowie ein automatisches Ansteuern der Reibungsbremse, sobald der Antrieb des Drehantriebes vom Fahrer auf Null geschaltet wird.

Eine weitere bekannte Form des Abbremsens ist das Abbremsen über den Drehmotor. Dabei wird der Drehmotor durch ein konstantes oder regelbares Bremsventil abgebremst, sobald der Drehantrieb vom Fahrer auf Null geschaltet wird. Bei einem Antrieb über einen Hydraulikmotor wird z.B. eine Drossel im Hydraulikkreislauf in der Null-Stellung des Steuerhebels zugeschaltet und der durch die Drossel erzeute Gegendruck bremst den Oberwagen ab. Ähnliche Lösungen gibt es auch für elektrische Drehantriebe.

Bekannt sind auch gattungsgemäße Verfahren bzw. Schwenkbremseinrichtungen. Dabei erfolgt das Abbremsen des Oberwagens durch Gegensteuern (Kontern). Bei dieser Ausführung verfügt die Arbeitsmaschine über keine eigentliche Bremse oder Bremseinrichtung, sondern nur - falls erforderlich - über eine Haltebremse, die den Oberwagen im Stillstand fixiert. Das Gegensteuern leitet der Fahrer mit seinem Steuerhebel ein, indem er die entgegengesetzte Drehbewegung ansteuert. Der Drehmotor erzeugt dann ein entgegengesetztes Drehmoment und bremst den Oberwagen ab. Sobald die Drehbewegung Null ist, muß der Steuerhebel auf Null gestellt werden, um das Schwenken in Gegenrichtung zu vermeiden.

Diese Art des Abbremsens ist wegen der einfachen Bauart günstig, erfordert aber vom Fahrer ein gewisses Geschick, Erfahrung und Aufmerksamkeit, um den Stillstand der Drehbewegung sicher zu erreichen. Weiterhin wird durch diese Art des Abbremsens die Bremsenergie in das Antriebssystem zurückgeführt und führt damit zur Energieeinsparung.

Aufgabe der Erfindung ist es, das Abbremsen des Oberwagens einer Arbeitsmaschine durch Gegensteuern zu verbessern, um es möglichst frei von Bedienungsfehlern durch den Fahrer zu machen und um einen sicheren Stillstand des Oberwagens zu erreichen.

Diese Aufgabe wird mit einem Verfahren der eingangs bezeichneten Art erfindungsgemäß dadurch gelöst, daß die Drehbewegung des Oberwagens durch Gegensteuern automatisch abgebremst wird, wenn der Steuerhebel sich in einer Abbremsstellung, vorzugsweise in der Null-Stellung, befindet, in dem von einer Schaltlogik ein der vorhandenen Drehbewegung entgegengesetztes Schwenkmoment durch Umsteuern der hydrostatischen Schwenkpumpe des Hydrostaten solange eingesteuert wird, bis von einer mit der Schaltlogik gekoppelten Drehzahlüberwachungseinrichtung der Stillstand des Oberwagens festgestellt wird.

Mit der Erfindung wird somit ein Verfahren vorgeschlagen, mit dem eine automatische Abbremsung durch Gegensteuern erfolgt, die unabhängig vom Fahrer ist, d.h. das automatische Abbremsen erfolgt, sobald der Fahrer den Steuerhebel in die Abbremsstellung gebracht hat. Das Abbremsen ist damit unabhängig von der Geschicklichkeit, der Erfahrung und der Aufmerksamkeit des Fahrers und wird sicher erreicht, da beim Abbremsvorgang durch Gegensteuern ständig die Drehbewegung des Oberwagens überwacht und bei Stillstand der Bremsvorgang beendet wird.

Um bei allen Arbeitsbedingungen der Arbeitsmaschine, unabhängig von der Steuerhebelbetätigung, immer das richtige Gegendrehmoment einzuleiten und die Drehbewegung zum Stillstand zu bringen, ist vorteilhaft vorgesehen, daß die jeweilige Drehrichtung des Oberwagens von der Schaltlogik ermittelt wird. Insbesondere bei Schräglagen der Arbeitsmaschine muß nämlich sichergestellt sein, daß durch die Hangabtriebskraft verursachte ungewollte Drehbewegungen nicht zu Fehlsteuerungen führen. Eine solche kann beispielsweise eintreten, wenn beim Bergaufschwenken der Oberwagen etwas bergab dreht, bevor die eingesteuerte Bergaufbewegung wirksam wird.

Dazu wird erfindungsgemäß über einen Drehzahlmesser oder dgl. die Drehgeschwindigkeit erfaßt, sobald der Fahrer die Schwenkbewegung eingeleitet hat, über die Schaltlogik die Drehrichtung ermittelt und über die Schaltlogik anschließend das automatische Gegensteuern eingeleitet, sobald der Fahrer den Steuerhebel für die Schwenkbewegung in die Abbremsstellung gestellt hat. Das automatische Gegensteuern bleibt dann solange aktiv, bis der Oberwagen zum Stillstand gekommen ist. Dabei kann dann vorzugsweise von der Schaltlogik automatisch eine Haltebremse ausgelöst werden. Anschließend wird die Drehrichtungserkennung in der Schaltlogik gelöscht. Die Schaltlogik verhindert dadurch eine unerwünschte Drehrichtungsumkehr, die bei schnellem manuellen Gegensteuern durch den Fahrer eingeleitet werden kann.

Die vorstehend erwähnte Aufgabe wird auch mit einer gattungsgemäßen Schwenkbremseinrichtung erfindungsgemäß dadurch gelöst, daß eine Schaltlogik, die mit der hydrostatischen Schwenkpumpe des Hydrostaten und dem Steuerventil verbunden ist und so eingerichtet ist, daß sie die Drehbewegung des Oberwagens durch Gegensteuern automatisch abbremst, sobald sich der Steuerhebel des Steuerventils in einer Abbremsstellung, vorzugsweise in der Null-Stellung befindet, und eine Drehzahlüberwachungseinrichtung für den Oberwagen vorgesehen sind, die mit der Schaltlogik derart verbunden ist, daß bei Stillstand des Oberwagens das Gegensteuern beendet wird.

Die Schaltlogik der Schwenkbremseinrichtung ist vorzugsweise von mechanischen, elektronischen, hydraulischen und/oder pneumatischen Bauelementen oder von einer elektronischen Steuereinheit gebildet.

Ferner ist aus den vorerwähnten Gründen für ein einwandfreies Arbeiten der Schwenkbremseinrichtung bei schrägstehenden Arbeitsmaschinen eine mit der Schaltlogik verbundene Drehrichtungserkennungseinrichtung vorgesehen. Außerdem ist zweckmäßigerweise eine Haltebremse vorgesehen, die bei Stillstand des Oberwagens von der Schaltlogik aktiviert wird.

Ferner kann vorteilhaft ein Druckregelventil zur Einstellung des Gegensteuermomentes vorgesehen sein.

Die Schaltlogik kann grundsätzlich über ein (oder zwei separate) Sensoren für Drehzahl und Drehrichtung des Oberwagens verfügen, wodurch eine vereinfachte Schaltlogik ermöglicht wird, die auch die Probleme der Schräglage der Arbeitsmaschine löst.

Die Schaltlogik kann auch von einer elektronischen Steuereinheit gebildet sein, in der der Schwenkbefehl vom Steuergerät des Fahrers eingespeist wird sowie die Drehzahl und die Drehrichtung. Die elektronische Steuereinheit steuert dann über ihre Ausgänge den Schwenkantrieb und die Haltebremse an, um die beschriebene Form des Abbremsens zu erreichen. Weiterhin kann die Steuereinheit durch einen vom Fahrer zu betätigenden Betriebsartenwahlschalter zur Ausführung zusätzlicher Funktionen geeignet sein, d.h. es können verschiedene Betriebszustände hergestellt werden, wie z.B. ohne Einlegung der Haltebremse (Freilauf) oder die Blockierung der Drehbewegung unter Einlegen der Haltebremse und Ausschalten der Steuervorgaben des vom Fahrer betätigten Steuerhebels oder Einstellung des Abbremsens durch einstellbares Gegenschwenkmoment.

Die Erfindung ist nachstehend anhand der Zeichnung beispielsweise näher erläutert. Diese zeigt jeweils in schematischer Darstellung in
- Fig. 1: eine erste Ausgestaltung einer erfindungsgemäßen Schwenkbremseinrichtung,
- Fig. 2: eine Variante der ersten Ausgestaltung für Arbeiten in Schräglagen,
- Fig. 3: eine zweite Ausgestaltung der automatischen Schwenkbremseinrichtung und
- Fig. 4: eine dritte Ausgestaltung mit einer Steuereinheit.

In den Figuren sind für gleiche oder ähnliche Teile durchgängig dieselben Bezugszeichen verwandt. Dabei ist der abzubremsende Oberwagen einer ansonsten nicht dargestellten Arbeitsmaschine mit 28 bezeichnet. Dieser Oberwagen 28 wird über einen Drehmotor, der hydraulisch oder elektrisch sein kann, angetrieben. Bei diesem Drehmotor handelt es sich beim Ausführungsbeispiel um einen hydraulischen Schwenkmotor 29. Dieser Drehmotor bewirkt über ein nicht dargestelltes Getriebe, das mit einem Ritzel in die Verzahnung des Drehlagers eingreift, die Drehung des Oberwagens 28 der Arbeitsmaschine.

Dazu wird eine in einem geschlossenen Hydraulikkreis mit dem Schwenkmotor 29 angeordnete Schwenkpumpe 1 über Leitungen 17, 18 so angesteuert, daß der Schwenkmotor 29 den Oberwagen 28 der Arbeitsmaschine in beide Drehrichtungen drehen kann.

Die Leitung 18 bewirkt die Drehrichtung nach links, die Leitung 17 nach rechts.

Ein Steuerventil 4 mit Steuerhebel im Fahrerhaus wird von einer Hilfspumpe 6 über eine Leitung 19 mit Steueröl versorgt und leitet über Leitungen 20 bzw. 21 die Steuersignale über Schaltventile 2, 3 auf die Schwenkpumpe 1. Die Schaltventile 2, 3 sind so geschaltet, daß sie im Ruhezustand die Schaltsignale des Steuerventiles 4 weiterleiten. Die Hilfspumpe 6 liefert über Leitungen 22, 23 Steuerdruck an die Schaltventile 2, 3, die von einer Schaltlogik über Leitungen 24, 25 angesteuert werden. Wird z.B. das Schaltventil über die Leitung 24 angesteuert, so wird dadurch das Steuersignal des Steuerventils 4 abgeschaltet und der Steuerdruck der Leitung 22 in die Leitung 18 eingespeist, wodurch ein Gegensteuern bewirkt wird.

In der Null-Stellung des Schaltventils 4 sind die Schaltausgänge von Druckschaltern 8, 9 (Wechsler) der Schaltlogik geschlossen, aber spannungslos, so daß die das automatische Gegensteuern bewirkenden 3/2-Wegeschaltventile 2, 3 in der Ruhestellung stehen. Steuert der Fahrer die Schwenkpumpe 1 mit Hilfe des Steuerventils 4 nach rechts über die Leitung 20 sowie eine Leitung 36 an, so wird der Druckschalter 9 im Vorsteuerkreis umgeschaltet und leitet eine Hilfsspannung über ein geschlossenes Relais 10 an ein Relais 13 weiter.

Dieses Relais 13 schließt einen Schaltkontakt und bewirkt so das Zuschalten eines frequenzabhängigen Schalters 14. Dieser Schalter 14 wird mit Signalen eines Drehzahlsensors 16, der die Drehzahl des Oberwagens 28 mißt, versorgt und schaltet bei der Frequenz Null (Stillstand des Oberwagens 28) die Spannung für Schalter 12 und 13 ab. Der Schalter 11 öffnet dadurch aufgrund der angelegten Schaltspannung und Schalter 12 ist wegen fehlender Schaltspannung geöffnet. Durch diese Schaltlogik ist bei aktiviertem Druckschalter 9 der Stromfluß in Richtung der Leitungen 24, 25 unterbrochen und nur der Strompfad vom frequenzabhängigen Schalter 14 zum Schalter 9 geschlossen. Bei eingeleitetem Schwenken nach rechts über die Leitungen 20, 36 ist somit das Gegensteuern durch Ansteuerung des Ventils 2 über die Leitung 24 bereitgeschaltet.

Führt der Fahrer nun den Steuerhebel des Steuerventils 4 in die Null-Stellung, so wird der Schalter 9 geschaltet und die Schaltspannung fließt vom Schalter 14 über die Schalter 13, 10 und 9 und die Leitung 24 zu dem Ventil 2 und bewirkt das Gegensteuern solange, bis der Oberwagen 28 zum Stillstand kommt und der frequenzabhängige Schalter 14 infolgedessen die Stromversorgung unterbricht.

Durch das Öffnen des Schalters 11 über die Leitung 26 wird die Ansteuerung des Ventils 3 über die Leitung 25 so lange deaktiviert, bis der Oberwagen zum Stillstand gekommen ist. Dadurch ist sichergestellt, daß das in die andere Richtung wirkende Bremsmoment erst nach Stillstand des Oberwagens aktiviert werden kann.

Ist für die eine Schwenkrichtung das Gegensteuern bereitgeschaltet, so wird das entsprechende 3/2-Wegeschaltventil 2 in dem Augenblick umgeschaltet, in welchem der Vorsteuerdruck zusammenbricht und den Ansprechdruck des entsprechenden Druckschalters 9 unterschreitet (Steuerhebel des Steuerventils 4 in Null-Stellung oder Gegenrichtung). Ein definierter Vorsteuerdruck wird auf die Gegenseite der Schwenkpumpe 1 geleitet und bewirkt eine Ansteuerung der Schwenkpumpe 1 wie beim normalen, vom Fahrer eingesteuerten Gegensteuern. Kommt der Oberwagen 28 zum Stillstand und ist das Steuerventil 4 für die Funktion "Oberwagenschwenken" in Neutralstellung, so wird durch den frequenzabhängigen Schalter 14 die Spannung zum Relais 13, das sich in Selbsthaltung befindet, und zum entsprechenden 3/2-Wegeschaltventil 2 unterbrochen. Das automatische Gegensteuern (Kontern) wird beendet. Die beim automatischen Gegensteuern bewirkte Maximalverzögerung kann über ein Druckbegrenzungsventil 5 je nach Einsatz variiert werden.

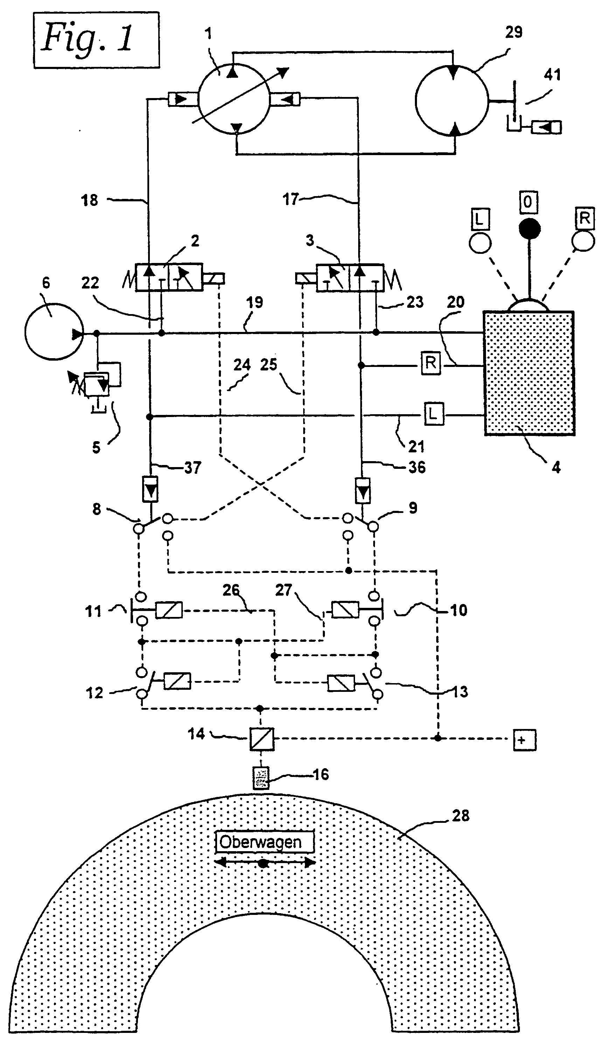

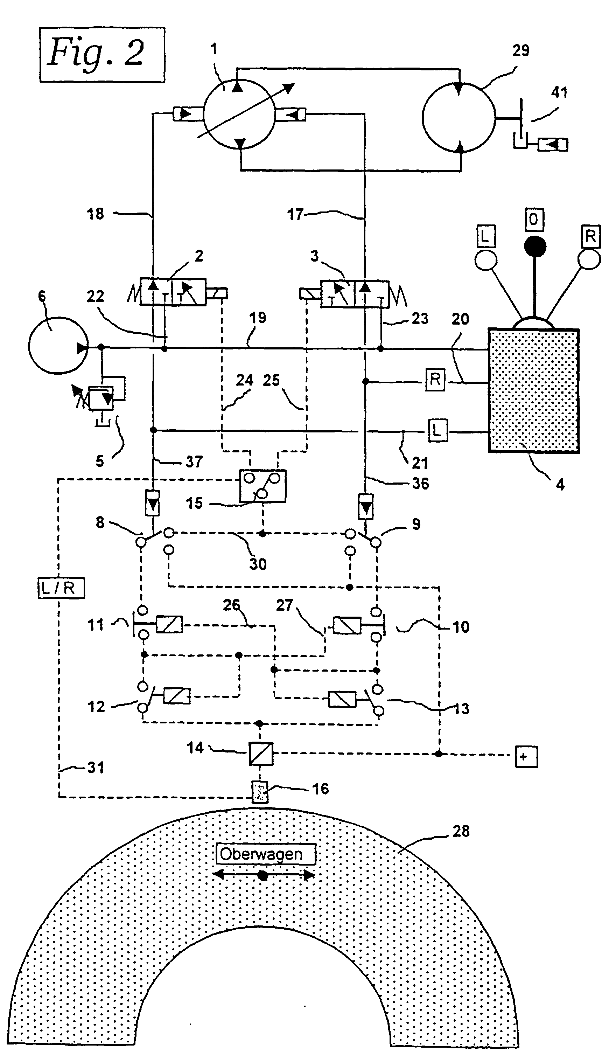

Die Ausführungsform der Bremsschwenkeinrichtung nach Fig. 2 unterscheidet sich von derjenigen nach Fig. 1 dadurch, daß sie auch bei Schräglagen der Arbeitsmaschine einwandfrei arbeitet. Dabei wird zusätzlich das für das automatische Gegensteuern erzeugte Schaltsignal über die Leitung 30 zu dem Schalter 15 geleitet, der von dem Drehrichtungssignal des Sensors 16 über die Leitung 31 angesteuert wird, so daß die richtige Seite der Schwenkpumpe über die Schaltventile 2, 3 angesteuert wird. Damit wird die richtige Einsteuerrichtung bei Schräglagen der Arbeitsmaschine sichergestellt.

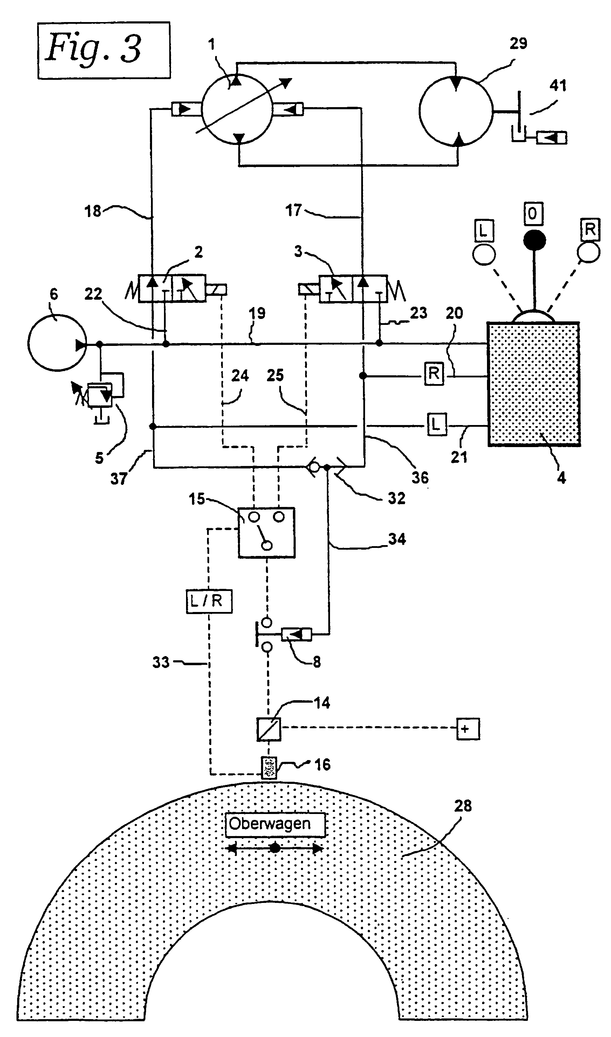

In Fig. 3 ist eine weitere Ausführungsform, nämlich eine zweite Ausgestaltung der automatischen Schwenkbremseinrichtung dargestellt. Bei dieser Ausgestaltung werden die Schaltventile 2, 3 über die Leitungen 24 und 25 angesteuert, die vom Schalter 16 drehrichtungsabhängig geschaltet werden. Die Vorsteuerdrücke für das Schwenken nach links bzw. rechts werden über die Leitungen 20, 21, 36 und 37 an ein Wechselventil 32 geleitet und mittels einer Leitung 34 auf einen gemeinsamen Druckschalter 8, der als Öffner arbeitet und ab einem vorgegebenen Steuerdruck den Spannungspfad vom frequenzabhängig schaltenden Schalter 14 zu dem drehrichtungsabhängig schaltenden Schalter 15 und weiter zu den Schaltventilen 2 oder 3 unterbricht. Wird während einer Schwenkbewegung (Schalter 14 geschlossen) der Steuerhebel des Steuerventils 4 für das Schwenken in die Neutralstellung gebracht, so schließt der Druckschalter 8 und der Spannungspfad vom Schalter 14 zu dem entsprechenden Schaltventil 2 oder 3 ist geschlossen. Die elektrische Ansteuerung des entsprechenden Schaltventils 2 oder 3 erfolgt über den Schalter 15, der gesteuert durch den Drehrichtungssensor 16 über die Leitung 13 drehrichtungsabhängig den einen oder anderen Schaltausgang ansteuert. Auf diese Weise ist sichergestellt, daß beim Gegensteuern die richtige Seite angesteuert wird.

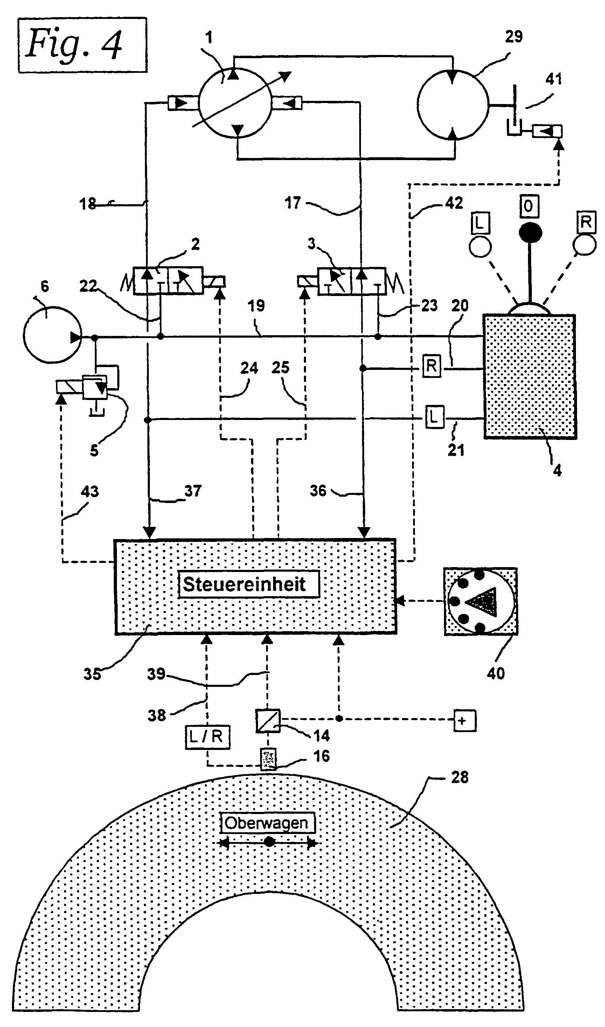

Fig. 4 zeigt eine dritte Ausgestaltung der Schwenkbremseinrichtung. Die Schaltlogik ist bei dieser Ausführungsform von einer elektronischen Steuereinheit 35 gebildet. Diese Steuereinheit 35 wird mit Eingangssignalen 36, 37 des Steuerventils 4, der Schwenkrichtungserkennung des Sensors 16 sowie des Drehsignales 16, 14 über eine Leitung 39 versorgt. Diese Signale werden in der Steuereinheit 35 z.B. so verknüpft, wie dies in Fig. 1 bis 3 dargestellt ist.

Weiterhin erhält die Steuereinheit 35 über einen Betriebsartenschalter 40, der vom Fahrer betätigt wird, Signale zur Ausführung festgelegter Zustände. Die sind z.B.:
- Bremse 41 blockieren über die Leitung 42,
- Steuerhebelfunktionen ignorieren (Leitungen 36, 37),
- Gegensteuerung ausschalten, d.h. Freilauf bei Steuerhebel des Steuerventils 4 in Null-Stellung (Leitungen 24, 25),
- Einstellung des Bremsmomentes durch Verstellung des Druckregelventils 5 über die Leitung 43.

## Patentansprüche

1. Verfahren zum Abbremsen eines drehbaren Oberwagens (28) einer Arbeitsmaschine, bei welchem die Drehbewegung des Oberwagens (28) über einen in einem geschlossenen Hydraulikkreis angeordneten, regelbaren Hydrostaten (29) erzeugt wird, wobei der Hydrostat (29) zur Einleitung der Drehbewegung über einen vom Fahrer betätigbaren Steuerhebel angesteuert wird, welcher wenigstens eine Null-Stellung und zwei Schaltstellungen für zwei gegenläufige Drehrichtungen des Oberwagens aufweist, wobei die Abbremsung des Oberwagens (28) durch Gegensteuern entgegen der Drehrichtung des Oberwagens erfolgt,
**dadurch gekennzeichnet,**
**daß** die Drehbewegung des Oberwagens (28) durch Gegensteuern automatisch abgebremst wird, wenn der Steuerhebel sich in einer Abbremsstellung, vorzugsweise in der Null-Stellung, befindet, in dem von einer Schaltlogik ein der vorhandenen Drehbewegung entgegengesetztes Schwenkmoment durch Umsteuern der hydrostatischen Schwenkpumpe (1) des Hydrostaten (29) solange eingesteuert wird, bis von einer mit der Schaltlogik gekoppelten Drehzahlüberwachungseinrichtung (16) der Stillstand des Oberwagens festgestellt wird.

2. Verfahren nach Anspruch 1,**dadurch gekennzeichnet,**
**daß** die jeweilige Drehrichtung des Oberwagens (28) von der Schaltlogik ermittelt wird.

3. Verfahren nach Anspruch 1 oder 2,
**dadurch gekennzeichnet,**
**daß** bei Stillstand des Oberwagens (28) von der Schaltlogik automatisch eine Haltebremse ausgelöst wird.

4. Schwenkbremseinrichtung zum Abbremsen eines drehbaren Oberwagens (28) einer Arbeitsmaschine mit einem über einen in einem geschlossenen Hydraulikkreis angeordneten regelbaren Hydrostaten (29) angetriebenen drehbaren Oberwagen (28), wobei der Hydrostat (29) zur Einleitung der Drehbewegung über einen vom Fahrer betätigbaren Steuerhebel eines Steuerventils ansteuerbar ist, welcher wenigstens eine Null-Stellung und zwei Schaltstellungen für zwei gegenläufige Drehrichtungen des Oberwagens aufweist,
**dadurch gekennzeichnet,**
**daß** eine Schaltlogik, die mit der hydrostatischen Schwenkpumpe (1) des Hydrostaten (29) und dem Steuerhebel des Steuerventils (4) verbunden ist und so eingerichtet ist, daß sie die Drehbewegung des Oberwagens (28) durch Gegensteuern automatisch abbremst, sobald sich der Steuerhebel des Steuerventils (4) in einer Abbremsstellung, vorzugsweise in der Null-Stellung, befindet, und eine Drehzahlüberwachungseinrichtung (16) für den Oberwagen (28) vorgesehen sind, die mit der Schaltlogik derart verbunden ist, daß bei Stillstand des Oberwagens (28) das Gegensteuern beendet wird.

5. Schwenkbremseinrichtung nach Anspruch 4,
**dadurch gekennzeichnet,**
**daß** die Schaltlogik von mechanischen, elektronischen, hydraulischen und/oder pneumatischen Bauelementen oder von einer elektronischen Steuereinheit (35) gebildet ist.

6. Schwenkbremseinrichtung nach Anspruch 4 oder 5,
**dadurch gekennzeichnet,**
**daß** eine mit der Schaltlogik verbundene Drehrichtungserkennungseinrichtung (16) vorgesehen ist.

7. Schwenkbremseinrichtung nach Anspruch 4 oder einem der folgenden,
**dadurch gekennzeichnet,**
**daß** eine Haltebremse vorgesehen ist, die bei Stillstand des Oberwagens (28) von der Schaltlogik aktiviert wird.

8. Schwenkbremseinrichtung nach Anspruch 4 oder einem der folgenden,
**dadurch gekennzeichnet,**
**daß** ein Druckregelventil (5) zur Einstellung des Gegensteuermomentes vorgesehen ist.

9. Schwenkbremseinrichtung nach Anspruch 4 oder einem der folgenden,
**dadurch gekennzeichnet,**
**daß** die Schaltlogik von einer elektronischen Steuereinheit (35) gebildet ist, die so eingerichtet ist, daß sie durch einen vom Fahrer zu betätigenden Betriebsartenwahlschalter (40) zur Ausführung zusätzlicher Funktionen geeignet ist.

## Claims

1. A method of braking a rotatable superstructure (28) of a working machine in which the rotary movement of the superstructure (28) is produced by way of a regulatable hydrostatic assembly (29) arranged in a closed hydraulic circuit, wherein the hydrostatic assembly (29) is actuated for initiating the rotary movement by way of a control lever which is actuatable by the driver and which has at least a neutral position and two switching positions for two opposite directions of rotation of the superstructure, wherein braking of the superstructure (28) is effected by counter-actuation in opposite relationship to the direction of rotation of the superstructure,
**characterised in that**
the rotary movement of the superstructure (28) is braked automatically by counter-actuation when the control lever is in a braking position, preferably in the neutral position, in which a pivoting moment in opposite relationship to the prevailing rotary movement is implemented by a switching logic means by reversal of the hydrostatic pivoting pump (1) of the hydrostatic assembly (29) until the superstructure is detected as having come to a standstill by a rotary speed monitoring device (16) coupled to the switching logic means.

2. A method according to claim 1 **characterised in that** the respective direction of rotation of the superstructure (28) is ascertained by the switching logic means.

3. A method according to claim 1 or claim 2 **characterised in that** a holding brake is triggered automatically by the switching logic means when the superstructure (28) is at a standstill.

4. A pivoting braking device for braking a rotatable superstructure (28) of a working machine, comprising a rotatable superstructure (28) which is driven by way of a regulatable hydrostatic assembly (29) arranged in a closed hydraulic circuit, wherein the hydrostatic assembly (29) is actuable to initiate the rotary movement by way of a control lever of a control valve, which is actuatable by the driver and which has at least a neutral position and two switching positions for two opposite directions of rotation of the superstructure,
**characterised in that**
there are provided a switching logic means which is connected to the hydrostatic pivoting pump (1) of the hydrostatic assembly (29) and the control lever of the control valve (4) and is so adapted that it automatically brakes the rotary movement of the superstructure (28) by counter-actuation as soon as the control lever of the control valve (4) is in a braking position, preferably in the neutral position, and a rotary speed monitoring device (16) for the superstructure (28), which is connected to the switching logic means in such a way that counter-actuation is terminated when the superstructure (28) is at a standstill.

5. A pivoting braking device according to claim 4 **characterised in that** the switching logic means is formed by mechanical, electronic, hydraulic and/or pneumatic components or by an electronic control unit (35).

6. A pivoting braking device according to claim 4 or claim 5 **characterised in that** there is provided a rotational direction detection device (16) connected to the switching logic means.

7. A pivoting braking device according to claim 4 or one of the following claims **characterised in that** there is provided a holding brake which is activated by the switching logic means when the superstructure (28) is at a standstill.

8. A pivoting braking device according to claim 4 or one of the following claims **characterised in that** there is provided a pressure regulating valve (15) for adjusting the counter-actuation moment.

9. A pivoting braking device according to claim 4 or one of the following claims **characterised in that** the switching logic means is formed by an electronic control unit (35) which is so adapted that it is suitable for implementing additional functions by a mode selector switch (40) which is to be actuated by the driver.

## Revendications

1. Procédé pour freiner une tourelle rotative (28) d'une machine, dans lequel le mouvement de rotation de la tourelle (28) est produit par une unité hydrostatique régulable (29) agencée dans un circuit hydraulique fermé, ladite unité hydrostatique (29) étant pilotée au moyen d'un levier de commande actionnable par le conducteur pour amorcer le mouvement de rotation, ledit levier de commande présentant au moins une position zéro et deux positions de commutation pour deux sens de rotation opposées de la tourelle, dans lequel le freinage de la tourelle (28) a lieu par commande antagoniste en sens opposé au sens de rotation de la tourelle,
**caractérisé en ce que** le mouvement de rotation de la tourelle (28) est freiné automatiquement par commande antagoniste lorsque le levier de commande se trouve dans une position de freinage, de préférence dans la position zéro, dans laquelle un couple de pivotement en sens opposé au mouvement de rotation existante est appliqué par une logique de commutation en inversant la pompe de pivotement hydrostatique (1) de l'unité hydrostatique (29) jusqu'à ce que l'on constate l'immobilisation de la tourelle au moyen d'un dispositif de surveillance de rotation (16) accouplé à la logique de commutation.

2. Procédé selon la revendication 1, **caractérisé en ce que** le sens de rotation respectif de la tourelle (28) est constaté par la logique de commutation.

3. Procédé selon l'une ou l'autre des revendications 1 et 2, **caractérisé en ce que**, lors de l'immobilisation de la tourelle (28) un frein de maintien est automatiquement déclenché par la logique de commutation.

4. Dispositif de freinage de rotation pour freiner une tourelle rotative (28) d'une machine qui comprend une tourelle rotative (28) entraînée par une unité hydrostatique régulable (29) agencée dans un circuit hydraulique fermé, ladite unité hydrostatique (29) étant pilotée au moyen d'un levier de commande actionnable par le conducteur d'une valve de commande pour amorcer le mouvement de rotation, ledit levier de commande présentant au moins une position zéro et deux positions de commutation pour deux sens de rotation opposés de la tourelle,
**caractérisé en ce qu'**il est prévu
-- une logique de commutation, reliée à la pompe de pivotement hydrostatique (1) de l'unité hydrostatique (29) et au levier de commande de la valve de commande (4) et réalisée de telle façon qu'elle freine automatiquement le mouvement de rotation de la tourelle (28) par commande antagoniste, dès que le levier de commande de la valve de commande (4) se trouve dans une position de freinage, de préférence dans la position zéro, et
-- un dispositif de surveillance de rotation (16) pour la tourelle (28), qui est relié à la logique de commutation de telle manière que la commande antagoniste est terminée lors de l'immobilisation de la tourelle (28).

5. Dispositif de freinage selon la revendication 4, **caractérisé en ce que** la logique de commande est formée par des composants mécaniques, électroniques, hydrauliques et/ou pneumatiques, ou par une unité de commande électronique (35).

6. Dispositif de freinage selon l'une ou l'autre des revendications 4 et 5, **caractérisé en ce qu'**il est prévu un dispositif de reconnaissance du sens de rotation (16) relié à la logique de commande.

7. Dispositif de freinage selon la revendication 4 ou l'une des suivantes, **caractérisé en ce qu'**il est prévu un frein de maintien, qui est activé par la logique de commande lors de l'immobilisation de la tourelle (28).

8. Dispositif de freinage selon la revendication 4 ou l'une des suivantes, **caractérisé en ce qu'**il est prévu une valve de régulation de pression (5) pour régler le couple de commande antagoniste.

9. Dispositif de freinage selon la revendication 4 ou l'une des suivantes, **caractérisé en ce que** la logique de commutation est formée par une unité de commande électronique réalisée de manière à permettre l'exécution de fonctions supplémentaires au moyen d'un commutateur sélecteur (40) de mode de fonctionnement à actionner par le conducteur.
